Europäisches Patentamt

European Patent Office

Office européen des brevets

(11) Publication number : **0 508 818 A2**

# (12) EUROPEAN PATENT APPLICATION

(21) Application number : **92303242.9**

(22) Date of filing : **10.04.92**

(51) Int. Cl.⁵ : **B60P 3/20, B65D 90/00**

(30) Priority : **10.04.91 GB 9107526**

(43) Date of publication of application :
**14.10.92 Bulletin 92/42**

(84) Designated Contracting States :
**BE CH DE DK ES FR GB IT LI LU NL PT SE**

(71) Applicant : **SCHMITZ THERMOSTAR LIMITED**
**North Road**
**Harelaw, Stanley, County Durham DH9 8HJ**
**(GB)**

(72) Inventor : **Endelin, Claude, c/o Schmitz**
**Thermostar Limited**
**North Road, Harelaw, Stanley**
**County Durham DH9 8HJ (GB)**

(74) Representative : **Allen, Oliver John Richard**
**Lloyd Wise, Tregear & Co. Norman House**
**105-109 Strand**
**London, WC2R 0AE (GB)**

(54) Improvements in and relating to refrigerated vehicles or containers.

(57)    A refrigerated vehicle or container of the type having divider means for dividing the load space thereof into one or more compartments is described. The divider means comprises at least one flexible curtain formed at least partially from insulative material and means for suspending the curtain in a position in which it divides the load space. The suspension means suitably comprises a roller around which the curtain can be rolled when not in use.

Fig.1.

EP 0 508 818 A2

Jouve, 18, rue Saint-Denis, 75001 PARIS

This invention relates to vehicles for transportation of goods which have to be maintained at a fixed temperature. Such vehicles are often referred to as refrigerated vehicles even though they may in fact be employed to keep goods at a higher than ambient temperature if the goods are of a type that will be detrimentally affected by extreme cold and/or frost. The vehicles may be in form of, for example, lorries, trailers, semi-trailers or vans. The invention also relates to containers for the storage or transportation of goods of the type referred to, in a similar fashion, as "refrigerated".

Refrigerated vehicles or containers comprise an insulated load-carrying space and they are often provided with dividers for separating the load-carrying space into a number of compartments. A particular purpose of this is to allow carriage of a number of types of goods, each of which have to be maintained at a different temperature.

One known form of divider, which is generally referred to as a "bulkhead", comprises a rigid panel securable to the walls and/or roof of the load-carrying space to form compartments on either side thereof. Bulkheads generally consist of a hollow metal panel which can be filled with insulating material.

One known form of bulkhead is carried in a load-carrying space by a frame which is movable along the roof of the load-carrying space. The connection between the bulk head and the frame is such that the bulkhead can be moved between two positions, a first position, in which it lies flat against the roof of the load-carrying space, and a second, in which it is vertically orientated and forms compartments.

The use of such known bulkheads has a number of drawbacks. Firstly, these are generally of relatively complicated design, in particular, if the compartments formed by the bulkheads are to be adequately insulated from each other. Secondly, they are relative expensive because it is necessary to use metal for them in order that they have sufficient strength and also because of their complicated design. Thirdly, they are relatively heavy and add to the weight of the vehicle.

Another way of separating the goods carried in a refrigerated vehicle or container is to use a "mattress" of spongy insulative material. This is forced against a stack of already loaded goods and is sized such that its edges are compressed by the roof, floor and walls of the load-carrying space. Further goods are then loaded in front of the mattress. The compression of the mattress edges serves to insulate the two sets of goods from each other. The use of this arrangement has not been widespread, probably because of the unwieldy nature of the mattress which makes it difficult to put in place.

A refrigerated vehicle or container in accordance with the invention has means for dividing the load-carrying space thereof into one or more compartments, the divider means comprising at least one flexible curtain formed at least partially from insulative material and means for suspending the curtain in a position in which it divides the load space.

The advantage of this is that the weight and cost of the divider is less, and its design is less complicated, than known bulkhead dividers. Moreover, the divider does not give rise to such problems of loading as are encountered with unwieldy and inflexible mattresses.

The curtain may comprise one or more panels, each panel including at least one inner layer of insulative material, for example, neoprene foam and two outer protective layers of some suitable reinforced material which is resistance to tearing or damage due to movement of goods in the container or trailer and therefore prevents damage to the insulative layer. A suitable material for the outer layers would be reinforced polyvinyl chloride.

The material from which the curtain is made may itself be flexible or, alternatively, the curtain may be provided with a plurality of rows of stitching extending thereacross which will render it flexible.

Whilst the curtain could be suspended by means of hooks, for example, its flexible nature renders it particularly suitable for use with suspension means in the form of a roller carried on the roof/walls of the load carrying space around which the curtain can be rolled when not in use. The roller thus not only facilitates use of the curtain divider since it can simply be pulled down therefrom into the desired position, but also allows the curtain divider to be stored out of the main area of the load-carrying space, up adjacent the roof, when not required or when the vehicle or container is being loaded. The suspension means may alternatively or additionally comprise a frame carried on the roof/walls of the load-carrying space and movable therealong. The frame can be provided with runners at the extremities thereof movable within tracks secured to the roof/upper portions of the walls of the load space. This form of suspension means enables the curtain divider to be located in any desired position along the trailer or container and thus allows compartments of variable size to be formed.

The curtain divider may be provided along at least one edge with a seal. In one preferred embodiment, brush seals are provided along those edges of the curtain which, in the suspended position thereof, are vertical whilst a rigid rod is provided adjacent the edge of the curtain which, in a suspended position thereof, is lowermost, the rod being so positioned as to force the edge into contact with the floor of the load space. The arrangement is preferably such that there is a portion of insulative material between the rod and the extremity of the edge of the curtain which will ensure good sealing along that edge when the curtain divider is in the dividing position. Heat is prevented from being transferred at the vertical edges of the curtain divider when in the dividing position by the brush seals.

The use of brush seals is advantageous because these are themselves fairly flexible and easily deformed and so they will not interfere with the rolling away of the curtain divider or make it difficult to bring into the dividing position.

The invention will now be further described by way of example with reference to the accompanying drawings in which:-

Figure 1 is perspective view of a divider for a vehicle or container in accordance with the invention;

Figure 2 is a partial section of the divider of Figure 1 taken along the line aa;

Figure 3 is a partial section of the divider of Figure 2 taken along the line bb; and

Figure 4 is a schematic view illustrating the operation of the divider of Figure 1.

The divider 2 shown in the Figures is in the form of a curtain which comprises two panels 4. Each panel 4 consists of a layer of insulative material, for example neoprene foam, sandwiched between two layers of reinforced material 8, for example reinforced polyvinyl chloride. The two panels 4 are secured together along their edges, see 10, to define a gap 12 therebetween. The gap 12 serves to further prevent transfer of heat across the curtain 2.

The curtain 2 can be alternatively formed from a single panel 4 or three or more panels 4.

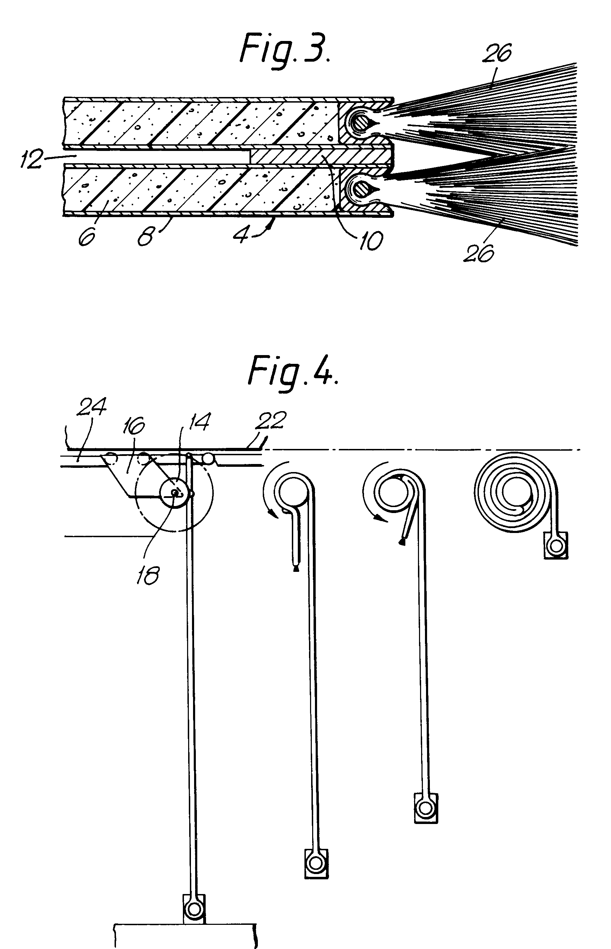

One edge of the curtain 2 is connected to a roller 14. The materials from which the curtain 2 is made are chosen to be sufficiently flexible that it can be rolled around the roller 14 as illustrated in Figure 4. Alternatively or additionally, the curtain 2 could be provided with layers of stitching parallel to the roller 14 to render it sufficiently flexible for it to be rolled therearound.

The roller 14 is itself connected to a frame 16 by cooperation between spigots 18 on its ends with corresponding apertures in the frame 16. The frame 16 in turn is carried adjacent the roof 22 of a refrigerated vehicle or container by means of runners on the extremities thereof which are movable along tracks 24 secured to the upper edges of the walls of the load-carrying space of the refrigerated vehicle or container, adjacent the roof 22 thereof. The frame 16, and hence the roller 14 and curtain 2, can therefore be moved into any desired location along the length of the load-carrying space of the refrigerated vehicle or container.

With the frame 16 and roller 14 in the required location, the curtain 2 can be pulled downwards to unroll it from the roller 14 and bring it into a vertical position in which it divides the load-carrying space into two compartments. In this vertical position, brush seals 26 extend between the vertical edges of the curtain 2 and the walls of the load-carrying space of the refrigerated vehicle or container to prevent heat transfer between the two compartments either side of the curtain 2 in this region.

The bottom edge of the curtain 2 is also sealed.

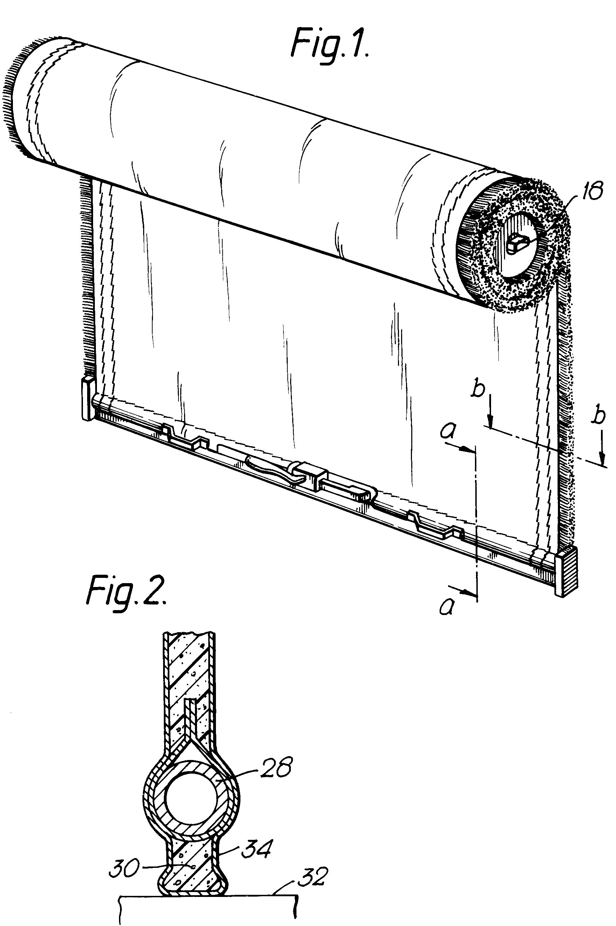

This is achieved by providing a rigid rod 28 within the bottom edge of the curtain, see Figure 2, in a position such that when the curtain 2 is fully withdrawn from the roller 14, the rod 28 forces the lower edge 30 of the curtain 2 into contact with the floor 32 of the load-carrying space of the refrigerated vehicle or container. As shown in Figure 2, the lower edge 30 of the curtain 2 may be formed from a single strip of insulative material surrounded by a protective skin 24. Thus, adequate sealing at the lower region of the curtain is ensured.

As will be appreciated from Figure 4, when not required, the curtain 2 can stowed away adjacent the roof 22 of the load-carrying space of the refrigerated vehicle or container. It will then not intrude significantly into the load-carrying space and will not interfere with loading thereof. This advantageous arrangement, in which a roller is employed for the curtain, is made possible by the flexible nature of the curtain 2. The flexible nature also serves to make the curtain easy to handle and quick to use.

The curtain is relatively light and simple in form which makes it inexpensive to produce. However, the provision of the reinforced skins renders it impervious to damage from the goods carried in the load-carrying space.

## Claims

1. A refrigerated vehicle or container having means for dividing the load space thereof into one or more compartments, the divider means comprising at least one flexible curtain formed at least partially from insulative material and means for suspending the curtain in a position in which it divides the load space.

2. A refrigerated vehicle or container as claimed in Claim 1 wherein the curtain comprises one or more panels, each panel including at least one inner layer of insulative material and two outer protective layers of reinforced material.

3. A refrigerated vehicle or container as claimed in Claim 2 wherein the curtain comprises two or more spaced panels connected face to face at their edges.

4. A refrigerated vehicle or container as claimed in any preceding Claim wherein the material from which the curtain is made is flexible and/or the curtain is rendered flexible by provision of a plurality of rows of stitching across the width thereof.

5. A refrigerated vehicle or container as claimed in any preceding Claim wherein the curtain is provided with a seal along at least one edge thereof.

6. A refrigerated vehicle or container as claimed in any preceding Claim wherein brush seals are provided along the edges of the curtain which, in the suspended position thereof, are vertical.

7. A refrigerated vehicle or container as claimed in any preceding Claim wherein a rigid rod is provided adjacent the edge of the curtain which, in the suspended position thereof, is lowermost, the rod being positioned and arranged such as to force the edge into contact with the floor of the load space.

8. A refrigerated vehicle or container as claimed in any preceding Claim wherein the suspension means comprises a roller carried on the roof and/or walls of the load space around which the curtain can be rolled when not in use.

9. A refrigerated vehicle or container as claimed in any preceding Claim wherein the suspension means comprises a frame carried on the roof and/or walls of the load space and movable longitudinally along the load space.

10. A refrigerated vehicle or container as claimed in Claim 9 wherein the frame has runners at the extremities thereof which are movable within tracks secured to the roof and/or upper portions of the walls of the load space.

# Fig.1.

# Fig.2.

Fig. 3.

Fig. 4.